(19) Europäisches Patentamt

European Patent Office

Office européen des brevets

(11) EP 0 762 832 B1

(12) FASCICULE DE BREVET EUROPEEN

(45) Date de publication et mention de la délivrance du brevet:
**01.08.2001 Bulletin 2001/31**

(51) Int Cl.[7]: **A01N 37/06**, A01N 37/02
// (A01N37/06, 37:06, 37:02),
(A01N37/02, 37:06, 37:02)

(21) Numéro de dépôt: **95921856.1**

(22) Date de dépôt: **30.05.1995**

(86) Numéro de dépôt international:
**PCT/FR95/00697**

(87) Numéro de publication internationale:
**WO 95/32626 (07.12.1995 Gazette 1995/52)**

(54) **UTILISATION D'AU MOINS UN ACIDE GRAS CONTRE LA PONTE DES LEPIDOPTERES TORTRICIDES**

VERWENDUNG MINDESTENS EINER FETTSÄURE GEGEN DIE EIABLAGE VON LEPIDOPTERA TORTRICIDAE

USE OF AT LEAST ONE FATTY ACID FOR THE CONTROL OF TORTRICID LEPIDOPTERA OVIPOSITION

(84) Etats contractants désignés:
**AT BE CH DE DK ES FR GB GR IE IT LI LU MC NL PT SE**

(30) Priorité: **30.05.1994 FR 9406529**

(43) Date de publication de la demande:
**19.03.1997 Bulletin 1997/12**

(73) Titulaire: **INSTITUT NATIONAL DE LA RECHERCHE AGRONOMIQUE (I.N.R.A.) 75341 Paris Cédéx 07 (FR)**

(72) Inventeurs:
• **THIERY, Denis F-75014 Paris (FR)**
• **GABEL, Bruno 811 05 Bratislava 1 (SK)**

(74) Mandataire: **Vialle-Presles, Marie José et al Cabinet Orès, 6, Avenue de Messine 75008 Paris (FR)**

(56) Documents cités:
**WO-A-92/02138**          **WO-A-93/00812**

• **EXPERIENTIA, vol. 49, no. 11, 15 Novembre 1993 BASEL CH, pages 998-1001, D.THIERY ET AL. 'Inter-specific avoidance of egg-associated semiochemicals in four tortricids'**
• **EXPERIENTIA, vol. 48, no. 7, 15 Juillet 1992 BASEL CH, pages 697-699, D.THIERY ET AL. 'Identification of an oviposition-regulating pheromone in the European grapevine moth, Lobesia botrana (Lepidoptera: Tortricidae)'**
• **BIOLOGICAL ABSTRACTS, vol. 82, Philadelphia, PA, US; abstract no. 231090, W.A.WOLF AT A. 'CORRELATION OF FATTY-ACID AND PHEROMONE COMPONENT STRUCTURES IN SEX PHEROMONE GLANDS OF 10 LEPIDOPTERAN SPECIES' & ENVIRON ENTOMOL, vol. 10, no. 6, 1981 pages 943-946,**
• **DATABASE WPI Week 8544 Derwent Publications Ltd., London, GB; AN 85-273381 [44] & JP,A,60 185 702 (JAPAN TOBACCO & SALT PUB) , 21 Septembre 1985**

**Description**

L'Invention est relative à l'utilisation de substances dotées de propriétés anti-oviposition, pour lutter contre les insectes ravageurs.

On sait que certaines substances constituent des signaux chimiques intra-spécifiques, qui sont déposés par certains insectes femelles sur et/ou au voisinage de leur oeufs après la ponte. Les emplacements ainsi marqués sont ensuite rejetés par les autres femelles de la même espèce comme sites de ponte. Il a donc été proposé d'utiliser l'effet dissuasif de ces substances dans la lutte contre les insectes ravageurs.

Les Inventeurs ont précédemment mis en évidence l'activité anti-oviposition sur la pyrale du maïs d'un extrait méthanolique des oeufs de cette espèce (*Ostrinia nubilalis*), et ont identifié le constituant actif comme comprenant un mélange des esters méthyliques des acides palmitoléique, palmitique, linoléique, oléique et stéarique [Demande PCT WO 92/02138, au nom de l'INSTITUT NATIONAL DE LA RECHERCHE AGRONOMIQUE et du CENTRE NATIONAL DE LA RECHERCHE SCIENTIFIQUE (Inventeur : D. THIERY)].

Les lépidoptères tortricidés, également dénommés tordeuses, parmi lesquels on citera, en particulier, les tordeuses de *la grappe, Lobesia botrana* (Eudemis), *Sparganothis pilleriana* et *Eupoecilia ambiguella* (Cochylis), qui sont des ravageurs des vignobles, ainsi que *Cydia pomonella* (Carpocapse des pommes), *Cydia molesta* (Tordeuse orientale du pêcher) et *Adoxophyes orana* (Tordeuse de la pelure) sont des insectes ravageurs responsables d'importants dégâts dans les cultures, et entraînant des pertes économiques notables. En conséquence, de nombreuses recherches ont été faites pour lutter contre ces insectes.

Les Inventeurs sont précédemment parvenus à sélectionner, à partir d'un extrait d'oeufs d'Eudémis de la vigne, un mélange de constituants dotés d'une activité anti-oviposition et à formuler une composition anti-oviposition, active non seulement sur cet insecte, mais également sur les autres espèces de tordeuses mentionnées ci-dessus [Demande PCT/WO 93/00812 aux noms de l'INSTITUT NATIONAL DE LA RECHERCHE AGRONOMIQUE et du CENTRE NATIONAL DE LA RECHERCHE SCIENTIFIQUE (Inventeurs : THIERY et GABEL.]. Les constituants actifs de cette composition sont les acides myristique, stéarique, et palmitique, et les esters méthyliques des acides palmitoléique, palmitique, linoléique, linolénique, oléique, et stéarique.

En poursuivant leurs recherches, les Inventeurs sont maintenant parvenus à identifier encore plus précisément les substances pourvues de propriétés anti-oviposition, et à mettre au point des formulations anti-oviposition à la fois plus simples et plus efficaces.

La présente Invention a pour objet l'utilisation d'un produit constitué par l'acide palmitique, l'acide palmitoléique, l'acide oléique, l'acide myristique, l'acide stéarique, l'acide linolénique et l'acide linoléique, comme agent anti-oviposition actif sur les lépidoptères tortricidés.

Selon un mode de mise en oeuvre préféré de la présente Invention, on utilise au moins un acide gras choisi dans le groupe constitué par l'acide palmitique, l'acide palmitoléique et l'acide oléique.

Selon un autre mode de mise en oeuvre préféré de la présence Invention, on utilise un mélange d'acide palmitique, d'acide palmitoléique, d'acide oléique, d'acide myristique, d'acide stéarique, d'acide linolénique et d'acide linoléique.

On observe un effet significatif sur le comportement de ponte à partir d'une dose correspondant généralement à 2 équivalents oeufs (2 e.e.) d'un mélange d'acide gras/cm$^2$, c'est-à-dire comprenant au moins l'un des acides gras précités, aux doses minimales suivantes : 1,06 ng/cm$^2$ d'acide myristique, 2,1 ng/cm$^2$ d'acide palmitique, 3,6 ng/cm$^2$ d'acide palmitoléique, 7 ng/cm$^2$ d'acide oléique, 20 ng/cm$^2$ d'acide stéarique, 22 ng/cm$^2$ d'acide linoléique, 7 ng/cm$^2$ d'acide linolénique. Chacun des acides gras étant actif séparément, il est possible de les associer entre eux dans n'importe quelles proportions. D'excellents résultats ont été cependant observés, sur le carpocapse des pommes, lorsque ces acides gras sont associés dans les proportions (en masse ou en volume) suivantes : une partie d'acide palmitoléique pour 2 à 5 parties de chacun des acides myristique, oléique et linolénique, et pour 5 à 15 parties de chacun des acides palmitique, stéarique et linoléique.

Les Inventeurs ont constaté que le traitement par des acides gras a pour effet de modifier le comportement de ponte des femelles en les détournant des sites traités. Ils ont en outre observé que l'activité anti-oviposition des esters d'acides gras implique un mécanisme un peu différent de celle des acides gras : les premiers semblent agir plutôt sur la réduction de la ponte, et les seconds sur le choix du site de ponte.

Les acides gras sont facilement disponibles dans le commerce, et peu coûteux. Ils peuvent donc être utilisés à grande échelle, dans le traitement des cultures.

La présente Invention a également pour objet un procédé de protection des plantes contre les Lépidoptères tortricidés, lequel procédé est caractérisé en ce que l'on met en contact les plantes à traiter avec une composition constituée par un acide gras ou un mélange d'acide gras, tels que défini ci-dessus.

La présente Invention sera mieux comprise à l'aide du complément de description qui va suivre, qui se réfère à des exemples de préparation et d'utilisation des compositions conformes à l'Invention. Il va de soi toutefois que ces exemples sont donnés uniquement à titre d'illustration de l'objet de l'Invention dont ils ne constituent en aucune manière une limitation.

**EXEMPLE 1 : <u>PREPARATION DE COMPOSITIONS ANTI-OVIPOSITION CONFORMES A L'INVENTION</u>**

Les différents constituants sont mélangés dans les proportions indiquées dans les tableaux I à VI ci-dessous. Lorsque les quantités de chacun des constituants sont exprimées en nanogrammes, le mélange obtenu correspond à un équivalent-oeuf (e.e.).

Les mélanges sont dissous dans un mélange acétone/eau distillée 50/50 (v/v), pour préparer une solution mère qui est ensuite diluée selon les besoins. A titre d'exemple, on peut préparer une solution mère comprenant 3 g de constituant actif (acides gras) pour 60 ml dudit solvant.

- Composition I : (exemple de comparaison)

TABLEAU I

| (en ng/e.e.) | |
|---|---|
| Myristate de méthyle | 0,015 |
| Palmitate de méthyle | 0,06 |
| Oléate de méthyle | 0,024 |
| Acide myristique | 0,53 |
| Acide palmitique | 11,2 |
| Acide palmitoléique | 1,82 |
| Acide oléique | 3,68 |
| Acide stéarique | 10,0 |
| Acide linoléique | 11,7 |
| Acide linolénique | 3,69 |

- Composition II : (exemple de comparaison)

TABLEAU II

| (en ng/e.e.) | |
|---|---|
| Palmitate de méthyle | 0,06 |
| Oléate de méthyle | 0,024 |
| Acide myristique | 0,53 |
| Acide palmitique | 11,2 |
| Acide palmitoléique | 1,82 |
| Acide oléique | 3,68 |
| Acide stéarique | 10,0 |
| Acide linoléique | 11,7 |
| Acide linolenique | 3,69 |

- Composition III :

TABLEAU III

| (en ng/e.e.) | |
|---|---|
| Acide myristique | 0,53 |
| Acide palmitique | 11,2 |
| Acide palmitoléique | 1,82 |
| Acide oléique | 3,68 |
| Acide stéarique | 10,0 |
| Acide linoléique | 11,7 |
| Acide linolénique | 3,69 |

- Composition IV : (exemple de comparaison)

EP 0 762 832 B1

TABLEAU IV

| (en ng/e.e.) | |
|---|---|
| Acide myristique | 0,258 |
| Palmitate de méthyle | 0,586 |
| Acide palmitique | 1,373 |
| Linoléate de méthyle | 0,225 |
| Linolénate de méthyle | 0,180 |
| Oléate de méthyle | 0,610 |
| Stéarate de méthyle | 0,290 |
| Acide stéarique | 0,180 |
| Palmitoléate de méthyle | 0,078 |

Cette conposition est décrite dans la Demande PCT/WO 9300812.

- Composition V : (exemple de comparaison)

TABLEAU V

| (en ng/e.e.) | |
|---|---|
| Palmitate de méthyle | 0,0117 |
| Acide palmitique | 0,0274 |

- Composition VI : (exemple de comparaison)

TABLEAU VI

| (en ng/e.e.) | |
|---|---|
| Palmitate de méthyle | 0,0117 |
| Linoléate de méthyle | 0,0044 |
| Stéarate de méthyle | 0,0058 |

**COMPARAISON DE L'EFFICACITE DE DIFFERENTES COMPOSITIONS SUR LE COMPORTEMENT DE PONTE DU CARPOCAPSE DU POMMIER**

**EXEMPLE 2 : - ACTIVITE SUR SUPPORT ARTIFICIEL**

**A.1. - Effet sur le choix du site de ponte**

Les compositions I, II et III ont été testées.

L'activité biologique a été évaluée en proposant aux femelles des sites artificiels de ponte (carton lisse) comportant des zones traitées et des zones non traitées. Il a été préalablement vérifié que le solvant ne modifiait pas le comportement de ponte.

L'étude du comportement de ponte a été effectuée dans des cages en altuglas dans lesquelles a été déposé un substrat d'oviposition permettant la ponte, constitué par une feuille de papier bristol (10,7 x 13,6 cm).

Sur chaque feuille de bristol ont été effectués 32 dépôts, de 5 µl chacun, de la composition à tester à la concentration voulue, ou du solvant seul ; les dépôts sont espacés de 2,1 cm et ont un diamètre de 1,1 cm.

Les concentrations utilisées sont de 0 (solvant seul), 2 et 20 équivalents-oeufs par dépôt (uniquement 20 e. e. pour la composition III).

Des supports témoins, n'ayant subi aucun traitement, ont également été utilisés.

Les supports d'oviposition ont été placés dans les cages. 10 femelles fécondées âgées de 2 jours ont été laissées en présence des supports, pendant 1 nuit, à l'issue de laquelle le nombre et la disposition des oeufs déposés sur les zones traitées et sur les zones non traitées ont été notés. D'autre part, les oeufs pondus pendant l'expérimentation sont comptés.

On détermine pour chaque composition l'indice d'évitement (IE), selon la formule :

4

$$IE\ (\%) = (T - NT)/(T + NT) \times 100,$$

T = nombre moyen d'oeufs sur les zones traitées ;

NT = nombre moyen d'oeufs sur les zones non traitées (T et NT sont rapportés à des surfaces équivalentes).

Un indice de -100 indique un évitement total et un indice de 0 indique l'absence d'effet (pas d'évitement).

La moyenne des indices obtenus pour chaque composition est comparée entre les différents types de traitement.

Les résultats sont les suivants :

- Dans le cas du support témoin (bristol sans traitement), IE = +1% (Sd = 24%) (pas d'effet), ce qui indique que les dépôts d'oeufs sont régulièrement répartis sur toute la superficie du support de ponte ; une répartition similaire est observée dans le cas du support traité au solvant.
- En ce qui concerne la composition I : à la dose de 2 équivalents oeufs par dépôt, IE = -35% (Sd = 17%), ce qui indique que les femelles déposent de préférence leurs oeufs sur des zones non traitées (bien qu'une fraction des femelles testées ne semble pas sensible à cette dose) ; cet effet de déterrence apparaît comme étant dose-dépendant, car il est encore augmenté à la dose de 20 équivalents oeufs par dépôt, où IE = -75% (Sd = 25%).

Un résultat identique est obtenu avec la composition II.

En ce qui concerne la composition III : à la dose de 20 e.e. par dépôt, IE = -66% (Sd = 8%).

Le nombre d'oeufs pondus par les femelles pendant l'expérimentation a été déterminé, avec les compositions I, III, et IV aux doses de 20 e.e. par dépôt ; les résultats sont représentés dans le tableau VII ci-dessous:

TABLEAU VII

| | | TEMOIN | COMPOSITION I | COMPOSITION III | COMPOSITION IV |
|---|---|---|---|---|---|
| N | | 21,73 | 15,60(**) | 22,43(ns) | 16,2(**) |
| N = nombre moyen d'oeufs par femelle | | | | | |
| Différence par rapport au témoin : | | | | | |
| ** = statistiquement significative ; | | | | | |
| ns = non significative | | | | | |

Les résultats ci-dessus montrent que : les compositions I et IV utilisées à la dose de 20 équivalents-oeufs par dépôt réduisent la ponte (environ - 25%) ; en revanche la composition III (mélange de 7 acides gras) ne présente pas d'activité significative sur la réduction de la ponte.

### EXEMPLE 3 : <u>ACTIVITE SUR POMMES</u>

1) Une première série d'expérimentations a été effectuée avec les compositions IV, V, et VI.

Les expérimentations ont été effectuées sur des femelles de *Cydia pomonella* fécondées.

Des pommes non traitées dépourvues de tout résidu de pesticide ont été récoltées juste avant les expériences et les pommes portant des oeufs ou des traces de larves de *C. pomonella* ont été écartées.

Les essais ont été effectués dans une cage (1 m x 0,4 m x 0,5 m) recouverte d'un tulle.

4 rangées de 4 pommes espacées de manière équidistantes sont suspendues au plafond de la cage. 8 pommes traitées et 8 pommes témoins sont rangées alternativement.

Pour chaque expérimentation, 4 femelles (âgées de 2 ou 3 jours) sont lâchées dans la cage, et après une nuit, le nombre d'oeufs déposés sur chaque pomme est compté.

A partir du nombre d'oeufs sur les pommes traitées (A) et sur les pommes témoins (B) l'index de déterrence a été calculé selon la formule suivante :

$$DI\ (\%) = (A - B)/(A + B) \times 100.$$

Les différents traitements ont consisté en :

- un traitement de contrôle : 16 pommes témoin traitées dans du solvant seul (10% méthanol, 90% eau distillée additionnée de 1 ml/l de TRITON X100)
- un choix à deux possibilités, entre les pommes trempées dans le solvant et les pommes trempées dans l'un des mélanges suivants :

a) La composition IV ;
b) La composition V ;
c) La composition VI.

Les acides gras et leurs esters méthyliques ont été dilués dans le solvant mentionné ci-dessus ; la dilution a été calculée afin d'obtenir les dépôts de 0,03 μg ou 0,3 μg de chaque mélange par pomme, correspondant respectivement à 72 et 720 équivalent-oeufs par pomme, ou bien à 0,9 et 9 équivalent oeufs par $cm^2$ de surface de pomme.

Dans les essais de contrôle, 28 des 36 femelles fécondées ont pondu pendant la nuit sur les pommes non traitées. Pour les autres traitements, ce nombre varie de 20 (composition IV à la dose la plus élevée) à 27 (composition IV à la dose la moins élevée) ; ces différences ne sont pas significatives.

Le nombre total des oeufs déposés pour chaque femelle ne diffère pas significativement d'un traitement à l'autre. Il varie de 18,9 oeufs par femelle (composition IV à haute dose), à 25,4 oeufs par femelle (composition IV à faible dose), avec une valeur de 23,9 oeufs en moyenne pour les essais sur les pommes contrôle.

Pour les essais de contrôle (toutes les pommes sont traitées avec le solvant seul), les oeufs sont distribués de façon homogène entre les 16 pommes. Le nombre moyen d'oeufs par pomme dans ces essais est de 4,6±4 avec 8,3% de pommes ne portant aucun oeuf.

La composition IV provoque une déterrence significative à la dose de 72 équivalent oeufs par pomme (DI = -31%). Cet effet est augmenté pour la dose de 720 équivalent oeufs par pomme, pour lequel 118 oeufs ont été déposés sur les pommes traitées et 261 sur les pommes non traitées (DI = -38%) est plus important que celui observé à la dose de 72 équivalent oeufs. Si l'on compare aux essais de contrôle, la composition IV à la plus faible dose réduit le nombre moyen d'oeufs (3,3 ± 2,9), mais le pourcentage de pommes ne portant pas d'oeufs n'est pas significativement différent.

La composition IV à la dose la plus forte réduit significativement à la fois le nombre d'oeufs par pomme (1,6± 1,8) et le pourcentage de pommes qui ont été attaquées (37,5% ne portent pas d'oeufs).

Les pommes traitées avec la composition V (mélange d'acide palmitique et de palmitate de méthyle) à la dose de 72 équivalent oeufs par pomme ont été évitées de façon significative (361 oeufs sur les pommes non traitées, 188 sur les pommes traitées) ; l'index de déterrence (DI = -32%) n'est pas significativement différent de celui observé avec la composition IV à la dose de 72 équivalent oeufs par pomme.

En revanche, la composition V à la dose de 720 équivalent oeufs par pomme provoque une déterrence élevée (487 oeufs sur les pommes non traitées, 134 oeufs sur les pommes traitées : DI = -57%). Cette déterrence est plus élevée que celle observée pour n'importe lequel des autres traitements. D'autre part, dans le cas des essais avec la composition V, on observe une quantité d'oeufs par pomme significativement inférieure à celle des essais de contrôle : 2,6± 2,8 et 1,8± 2 respectivement contre 4,6± 4 dans les essais de contrôle. Le pourcentage de pommes qui ne portent aucun oeuf est également plus élevé que celui observé dans les essais de contrôle (18,1% et 26,4% respectivement, contre 8,3% dans le contrôle).

La composition VI (mélange de palmitate de méthyle, linoléate de méthyle et stéarate de méthyle) provoque une légère déterrence non significative (328 oeufs sur les pommes non traitées, 253 sur les pommes traitées : DI = -13%). L'indice de déterrence ne diffère pas significativement de celui du traitement de contrôle. Cependant la composition VI à la dose la plus importante réduit significativement le nombre d'oeufs par pomme (3,5± 4,4), si on compare au contrôle, et l'on observe également un nombre de pommes sans oeuf significativement plus important que dans les essais de contrôle. Le nombre d'oeufs par pomme observé avec la composition VI à la dose la plus importante est équivalent à celui observé avec la composition IV à la dose la plus faible.

Dans les essais de contrôle, seulement 8% des pommes ne portent pas d'oeufs. Ceci est probablement dû à la densité élevée des femelles par cage (4 femelles pour 16 pommes). Les compositions IV et V à doses élevées augmentent la protection des pommes, avec respectivement 38% et 26% de pommes qui ne portent pas d'oeufs. En revanche, à la dose de 72 équivalent oeufs/pomme, une protection augmentée est observée seulement avec la composition V. La composition VI à la dose la plus élevée augmente également légèrement la protection (18% de pommes ne portant pas d'oeufs).

Il est à noter que la composition V (mélange d'acide palmitique et de palmitate de méthyle) a pour effet un indice de déterrence similaire ou plus élevé que celui observé avec le composition IV aux mêmes doses. En revanche, la composition V utilisée à des concentrations similaires n'a que peu d'effet sur la sélection des sites d'oviposition. En conséquence, la présence de l'acide palmitique permet de rendre compte pour l'essentiel, de la déterrence observée dans ces expérimentations.

2) Une deuxième série d'expérimentations a été effectuée avec une composition comprenant les constituants de la composition III, dilués dans un mélange acétone/eau 50/50 de sorte à obtenir sur chaque pomme le dépôt des quantités (en µg par pomme) indiquées dans le tableau VIII ci-dessous :

TABLEAU VIII

| | |
|---|---|
| Acide myristique | 2,5 |
| Acide palmitique | 10 |
| Acide palmitoléique | 1,25 |
| Acide oléique | 5 |
| Acide stéarique | 10 |
| Acide linoléique | 10 |
| Acide linolénique | 6,25 |

Des pommes (variété Golden delicious) sont trempées dans la composition ci-dessus, ou dans le solvant seul.

Deux types d'expérience ont été effectuées :

- une expérience dans laquelle chaque femelle est mise en présence de 10 pommes traitées et 10 pommes non traitées (situation de choix) ;
- une expérience dans laquelle chaque femelle est mise en présence de 20 pommes traitées.

Les pommes sont disposées de manière équidistante dans des enceintes comportementales, comme décrit ci-dessus, et les femelles sont enfermées dans ces enceintes pendant une nuit. Un indice d'évitement est calculé à partir du nombre d'oeufs déposés sur les pommes, comme décrit à l'exemple 2 ci-dessus.

Les résultats sont présentés dans le Tableau IX ci-dessous qui indique le nombre d'oeufs pondus par femelle pendant une nuit, et la moyenne de l'indice d'évitement obtenu pour chacune des 20 femelles (choix entre pommes traitées et non-traitées).

Les résultats montrent que les pommes traitées sont nettement évitées par les femelles, et confirment l'activité biologique du mélange de 7 acides gras.

TABLEAU IX

| | Oeufs sur pommes non traitées | Oeufs sur pommes traitées | Indice d'évitement |
|---|---|---|---|
| Témoin* | 323 | 98 | -7% |
| Traitement | 38 | 38 | -79% |
| Témoin = traitement au solvant seul (eau + acétone). | | | |

## EXEMPLE 4 : TRAITEMENT EN VERGER

Un demi-pommier ou un arbre entier d'environ 2 m de hauteur ont été traités par pulvérisations à l'aide d'un atomiseur à moteur (pulvérisateur classique pour traitement en vergers), avec une composition comprenant les constituants de la composition III. Le tableau X ci-dessous indique les quantités de composition appliquées pour un demi-arbre (ces quantités sont doublées pour un arbre entier).

TABLEAU X

| | Quantité en µg par demi arbre |
|---|---|
| Acide myristique | 2,5 |
| Acide palmitique | 10 |
| Acide palmitoléique | 1,25 |
| Acide oléique | 5 |
| Acide stéarique | 10 |
| Acide linoléique | 10 |
| Acide linolénique | 6,25 |

Dans le cas du traitement d'un demi-pommier, l'autre moitié de l'arbre ne subit aucun traitement. Chaque arbre est ensuite isolé sous une cage étanche aux insectes, de 2,5 m de haut sur 3 m de côté, et 20 femelles fécondées de carpocapse sont lâchées sous chaque cage. Un arbre non traité sert de contrôle dans les mêmes conditions.

La récolte de la totalité des pommes portées par chaque arbre est effectuée environ 1 mois après le traitement, et les pommes attaquées sont comptées et le pourcentage d'attaque est déterminé. Les résultats sont présentes dans le tableau XI ci-dessous.

TABLEAU XI

| | Arbre non traité | Arbre entièrement traité | 1/2 arbre non traité | 1/2 arbre traité |
|---|---|---|---|---|
| Nb de pommes | 556 | 591 | 130 | 233 |
| Pommes attaquées | 322 | 64 | 88 | 16 |
| Taux d'attaque (%) | 58% | 11% | 68% | 7% |

Ces résultats montrent que le traitement diminue très nettement le taux d'attaque, aussi bien lorsque les femelles ont le choix entre une partie traitée et une partie non traitée, que si la totalité de l'arbre est traitée.

**Revendications**

1.    Utilisation d'un produit constitué par un ou plusieurs acide(s) gras choisi(s) dans le groupe constitué par l'acide palmitique, l'acide palmitoléique, l'acide oléique, l'acide myristique, l'acide stéarique, l'acide linolénique et l'acide linoléique, comme agent anti-oviposition actif sur les lépidoptères tortricidés.

2.    Utilisation selon la revendication 1, caractérisée en ce que ledit acide gras est choisi dans le groupe constitué par l'acide palmitique, l'acide palmitoléique, l'acide oléique, et leurs mélanges.

3.    Utilisation selon la revendication 1, caractérisée en ce que l'on utilise un mélange d'acide palmitique, d'acide palmitoléique, d'acide oléique, d'acide myristique, d'acide stéarique, d'acide linolénique et d'acide linoléique.

4.    Utilisation selon la revendication 3, caractérisée en ce que lesdits acides gras sont associés dans les proportions suivantes : une partie d'acide palmitoléique, pour 2 à 5 parties de chacun des acides myristique, oléique et linolénique, et pour 5 à 15 parties de chacun des acides palmitique, stéarique et linoléique.

5.    Procédé de protection des plantes contre les Lépidoptères tortricidés, caractérisé en ce que l'on traite lesdites plantes avec un agent anti-oviposition tel que défini dans une quelconque des revendications 1 à 4.

**Patentansprüche**

1.    Verwendung eines Produkts, enthaltend eine oder mehrere Fettsäuren aus der Gruppe, bestehend aus Palmitinsäure, Palmitoleinsäure, Oleinsäure, Myristinsäure, Stearinsäure, Linolensäure und Linolsäure, als Mittel gegen die Eiablage, welches gegenüber Schmetterlingen aus der Familiie Tortricidae aktiv ist.

2.    Verwendung nach Anspruch 1, dadurch **gekennzeichnet,** dass die Fettsäure ausgewählt ist aus der Gruppe, bestehend aus Palmitinsäure, Palmitoleinsäure, Oleinsäure und ihren Gemischen.

3.    Verwendung nach Anspruch 1, dadurch **gekennzeichnet,** dass man ein Gemisch der Palmitinsäure, der Palmitoleinsäure, der Oleinsäure, der Myristinsäure, der Stearinsäure, der Linolensäure und der Linolsäure verwendet.

4.    Verwendung nach Anspruch 3, dadurch **gekennzeichnet,** dass die genannten Fettsäuren miteinander in den folgenden Verhältnissen vorliegen: ein Teil Palmitoleinsäure, für jeweils 2 bis 5 Teile Myristinsäure, Oleinsäure und Linolensäure, und für jeweils 5 bis 15 Teile Palmitinsäure, Stearinsäure und Linolsäure.

5.    Verfahren zum Schutz von Pflanzen gegen Schmetterlinge aus der Familie Tortricidae, dadurch **gekennzeichnet,** dass man die Pflanzen mit einem Mittel gegen die Eiablage, wie in einem der Ansprüche 1 bis 4 definiert, behandelt.

**Claims**

1.  Use of a product consisting of one or several fatty acid(s) chosen from the group consisting of palmitic acid, palmitoleic acid, oleic acid, myristic acid, stearic acid, linolenic acid and linoleic acid, as anti-oviposition agent active on tortricid Lepidoptera.

2.  Use according to Claim 1, characterised in that the said fatty acid is chosen from the group consisting of palmitic acid, palmitoleic acid, oleic acid and mixtures thereof.

3.  Use according to Claim 1, characterised in that a mixture of palmitic acid, palmitoleic acid, oleic acid, myristic acid, stearic acid, linolenic acid and linoleic acid is used.

4.  Use according to Claim 3, characterised in that the said fatty acids are combined in the following proportions: one part of palmitoleic acid per 2 to 5 parts of each of myristic, oleic and linolenic acids, and per 5 to 15 parts of each of palmitic, stearic and linoleic acids.

5.  Process for the protection of plants against tortricid Lepidoptera, characterised in that the said plants are treated with an anti-oviposition agent as defined in any of Claims 1 to 4.